(19) Europäisches Patentamt
European Patent Office
Office européen des brevets

(11) EP 3 320 068 B1

(12) EUROPEAN PATENT SPECIFICATION

(45) Date of publication and mention of the grant of the patent:
**07.10.2020 Bulletin 2020/41**

(21) Application number: **16734712.9**

(22) Date of filing: **06.07.2016**

(51) Int Cl.:
*C11D 1/72* (2006.01) *C11D 3/20* (2006.01)
*C11D 3/33* (2006.01) *C11D 3/37* (2006.01)
*C11D 11/00* (2006.01) *C08G 73/02* (2006.01)

(86) International application number:
**PCT/EP2016/065979**

(87) International publication number:
**WO 2017/005793 (12.01.2017 Gazette 2017/02)**

(54) **PROCESS FOR CLEANING DISHWARE**

VERFAHREN ZUR REINIGUNG VON GESCHIRR

PROCESSUS DE LAVAGE DE VAISSELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015 EP 15176021**

(43) Date of publication of application:
**16.05.2018 Bulletin 2018/20**

(73) Proprietor: **BASF SE**
**67056 Ludwigshafen am Rhein (DE)**

(72) Inventors:
- **GARCIA MARCOS, Alejandra**
  **67063 Ludwigshafen (DE)**
- **WEBER, Heike**
  **68239 Mannheim (DE)**
- **HUEFFER, Stephan**
  **67063 Ludwigshafen (DE)**
- **REIS-WALTHER, Eva-Maria**
  **64747 Breuberg (DE)**
- **DIETSCHE, Frank**
  **69198 Schriesheim (DE)**

(74) Representative: **BASF IP Association**
**BASF SE**
**G-FLP-C006**
**67056 Ludwigshafen (DE)**

(56) References cited:
**WO-A1-2015/000744**
**WO-A2-2014/131584**
**US-A1- 2009 124 529**
**US-A1- 2011 183 883**
**US-A1- 2013 284 211**

EP 3 320 068 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is directed towards a process for cleaning dishware soiled with fatty residue, characterized in that said process is carried out at a temperature in the range of from 45 to 65°C and using at least one formulation, comprising

(A) at least one complexing agent, selected from the alkali metal salts of citric acid, aminocarboxylic acids and from sodium tripolyphosphate,
(B) at least one non-ionic surfactant of general formula (I)

$$R^1\text{-}CH(OH)\text{-}CH_2\text{-}O\text{-}(AO)_x\text{-}R^2 \qquad (I)$$

(C) at least one copolymer selected from polyalkoxylated polyalkylenimines, wherein said polyalkoxylated polyalkylenimines contain at most 25 mol-% of ethylene oxide moieties in their polyalkylenoxide chains, referring to their total alkylenoxide content,

wherein:

$R^1$ being selected from $C_4$-$C_{30}$-alkyl, straight-chain or branched, and from $C_4$-$C_{30}$-alkylene, straight-chain or branched, with at least one C-C double bond,

$R^2$ being selected from $C_1$-$C_{30}$-alkyl, straight-chain or branched, and from $C_2$-$C_{30}$-alkylene, straight-chain or branched, with at least one C-C double bond,

x being selected from one to 100,

AO being identical or different alkylene oxides, selected from $CH_2$-$CH_2$-O, $(CH_2)_3$-O, $(CH_2)_4$-O, $CH_2CH(CH_3)$-O, $CH(CH_3)$-$CH_2$-O- and $CH_2CH(n\text{-}C_3H_7)$-O.

Furthermore, the present invention is directed towards formulations that are useful for cleaning dishware, and towards a process for making such formulations.

Detergent formulations, especially detergent formulations for automatic dishwashing, have to meet various requirements. When being used in automatic dishwashing, such detergent formulations need to enable a complete cleaning of china, polymer, metal, clay, and glassware and to remove all sorts of soil, like fat, proteins, starch, dyes, and more. The soils need to be dispersed in water during the cleaning and the water removal process, and the various soils should not deposit in the dishwashing machine in case of automatic dishwashing. Finally, during the drying process, the cleaned good should exhibit a good drying behavior, without spotting.

In US 2010/0234631, a method is disclosed to manufacture certain ethoxylated polyalkanolamines and certain ethoxylated and propoxylated polyalkanolamines. No application has been disclosed. In US 2009/0124529, laundry detergents and cleaning compositions containing ethoxylated polyalkanolamines and ethoxylated and propoxylated polyalkanolamines according to Sue/... Datum

US 2010/0234631 have been disclosed. They show particular advantages in removal of grass stains.

It has been found that in many cases fatty residues are being accumulated in the fat filter or sieves of automatic dishwashing machines. Such residues usually contain surfactant and fat that has been removed from the dishware, or degradation products from soil. The deposition of residues is disadvantageous because such filters or sieves need cleaning when filled with surfactant and fat. Furthermore, such fatty residues may become smelly in case the machine is not in use for some time, and they may even become a hygiene hazard.

WO2015/000744 discloses a process for cleaning dishware soiled with fat without having to cope with significant residues of surfactant and fat in the filters through use of a composition comprising a complexing agent, a mixed hydroxy ether nonionic surfactant and a copolymer of ethylenically unsaturated acid with further comonomers.

Mixed hydroxy ethers are particularly efficient non-ionic surfactants, especially when combined with certain polymers, see, e. g., WO 2008/095563. However, especially the use of mixed hydroxy ethers in formulations disclosed in WO 2008/095563 in automatic dishwashers can lead to rather high amounts of surfactant and fat residues in the filters or sieves.

It was therefore an objective of the present invention to provide a method for cleaning dishware soiled with fat without having to cope with significant residues of surfactant and fat in the filters or sieves of the dishwashing machine but not loss on quality of the dishwashing process. Furthermore, it was an objective to provide formulations useful for cleaning dishware soiled with fat without having to cope with significant residues of surfactant and fat in the filters or

sieves of the dishwashing machine but not loss on quality of the dishwashing process. Furthermore, it was an objective to provide a method for making such formulations.

Accordingly, the processes and formulations defined in the outset have been found. Firstly, the process defined in the outset, hereinafter also referred to as inventive process, will be defined in more detail.

The inventive process is a process for cleaning dishware. The inventive process can be carried out either manually (hand-dish-wash) or preferably with the help of a machine (machine dish-wash or automatic dish-wash). Dishes in the context of the present invention shall not only refer to plates from china but also to any kitchenware from china, metal, glass, clay or polymer, such as - but not limited to - cups, bowls and plates from china, flatware, drinking glasses such as wine glasses, champagne flutes, beer glasses and the like, and plastic kitchenware, furthermore pots, frying pans and Dutch ovens from metal such as iron, aluminum or stainless steel.

Dish-ware is provided in soiled form, among other soiled with fatty residue, also referred to as fat, that may stem from food itself or - for example in the case of frying pans - fat that stems from cooking or frying or baking food. The term "fat" may also include lard or oil, especially oil like sunflower oil, olive oil or other oil that is used for cooking purposes.

Said fatty residue may be the sole soiling of dishware to be cleaned according to the inventive process. In another embodiment of the present invention, dish-ware to be cleaned according to inventive process may be soiled with a combination of fat and at least one substance other than fat, for example pigment(s), protein, carbohydrates such as starch or sugar, caramel, furthermore lecithin, or dyestuff(s).

On the dish-ware may a coherent layer of soiling, or - in other embodiments - only one or more spots or limited areas of the respective dish-ware may be soiled.

The inventive process is being carried out at temperatures in the range of from 45 to 65°C, preferably 50 to 60°C. Said temperature refers to the temperature of the water being used in the inventive process. The inventive process is being described in more detail below.

The inventive process is being carried out using water. The amount of water is influenced by the type of machine used and by the choice of the program.

Formulations used in the inventive process comprise

(A) at least one complexing agent, hereinafter also being referred to as complexing agent (A), said complexing agent being selected from the alkali metal salts of citric acid, from the alkali metal salts of aminocarboxylic acids and from sodium tripolyphosphate.

Examples of alkali metal salts in the context of complexing agent (A) are the potassium salts and in particular the sodium salts.

Preferred alkali metal salts of citric acid are the sodium salts, especially the trisodium salt.

Preferred examples of aminocarboxylic acids are methylglycine diacetic acid (MGDA), glutamic acid diacetic acid (GLDA) and iminodisuccinic acid (IDS). Preferred alkali metal salts of aminocarboxylic acids are the trisodium salt of MGDA, the tetrasodium salt of GLDA and the tetrasodium salt of IDS.

Sodium tripolyphosphate preferably refers to the respective pentasodium salt.

In one embodiment of the present invention, said formulation may contain a combination of at least two complexing agents (A), such as, for example, a combination of alkali metal salts of citric acid and MGDA, or of citric acid and GLDA, or combinations of alkali metal salts of citric acid and sodium tripolyphosphate. Preferred are combinations of the respective sodium salts, in particular combinations of the trisodium salts of citric acid and MGDA.

Preferably, formulations used in the inventive process are phosphate-free. In the context of the present invention, the term phosphate-free refers to a combined phosphate and polyphosphate content of 0.01 or less up to 0.5% by weight of phosphate.

Formulations used in the inventive process further comprise

(B) at least one non-ionic surfactant of general formula (I)

$$R^1\text{-CH(OH)-CH}_2\text{-O-(AO)}_x\text{-R}^2 \qquad \text{(I)},$$

hereinafter also being referred to as "surfactant (B)", the variables being defined as follows:

$R^1$ is selected from $C_4$-$C_{30}$-alkyl, straight-chain or branched, and from $C_4$-$C_{30}$-alkylene, straight-chain or branched, with at least one C-C double bond, preferred is $C_4$-$C_{30}$-alkyl, straight-chain or branched, more preferred is straight-chain $C_4$-$C_{30}$-alkyl and even more preferred is n-$C_{10}$-$C_{12}$-alkyl.

$R^2$ is selected from $C_1$-$C_{30}$-alkyl, straight-chain or branched, and from $C_2$-$C_{30}$-alkylene, straight-chain or branched, with at least one C-C double bond, preferred is $C_6$-$C_{20}$-alkyl, more preferred is $C_8$-$C_{11}$-alkyl,

x is selected from one to 100, preferably from 5 to 60, more preferably 10 to 50, and even more preferably 20 to 40,

AO is selected from identical or different alkylene oxides, selected from $CH_2$-$CH_2$-O, $(CH_2)_3$-O, $(CH_2)_4$-O, $CH_2CH(CH_3)$-O, $CH(CH_3)$-$CH_2$-O- and $CH_2CH(n$-$C_3H_7)$-O. Preferred example of AO is $CH_2$-$CH_2$-O (EO).

In one embodiment of the present invention, $(AO)_x$ is selected from $(CH_2CH_2O)_{x1}$, x1 being selected from one to 50.

In one embodiment of the present invention, $(AO)_x$ is selected from -$(CH_2CH_2O)_{x2}$-$(CH_2CH(CH_3)$-$O)_{x3}$ and -$(CH_2CH_2O)_{x2}$-$(CH(CH_3)CH_2$-$O)_{x3}$, x2 and x3 being identical or different and selected from 1 to 30.

In one embodiment of the present invention, $(AO)_x$ is selected from -$(CH_2CH_2O)_{x4}$, x4 = being in the range of from 10 to 50, AO being EO, and $R^1$ and $R^2$ each being independently selected from $C_8$-$C_{14}$-alkyl.

In the context of the present invention, x or x1 or x2 and x3 or x4 are to be understood as average values, the number average being preferred. Therefore, each x or x1 or x2 or x3 or x4 - if applicable - can refer to a fraction although a specific molecule can only carry a whole number of alkylene oxide units.

Formulations used in the inventive process further comprise

(C) at least one copolymer, hereinafter also being referred to as copolymer (C), selected from polyalkoxylated polyalkylenimines, wherein said polyalkoxylated polyalkylenimines contain at most 25 mol-% of ethylene oxide moieties in their polyalkylenoxide chains, referring to their total alkylenoxide content. Copolymer (C) is described in more detail below.

In the context of the present invention, polyalkylenimines may be regarded as polyalkylenepolyamines. They bear at least 12 N-atoms per molecule in the form of amino groups, e. g., as $NH_2$-groups, as secondary amino groups or as tertiary amino groups. In a preferred embodiment of the present invention, polyalkylenimines are selected from poly-$C_2$-$C_4$-alkylenimines, in particular from polyethylenimines and polypropylenimines.

The term "polyethylenimine" in the context of the present invention does not only refer to polyethylenimine homopolymers but also to polyalkylenimines containing NH-$CH_2$-$CH_2$-NH structural elements together with other alkylene diamine structural elements, for example NH-$CH_2$-$CH_2$-$CH_2$-NH structural elements, NH-$CH_2$-$CH(CH_3)$-NH structural elements, NH-$(CH_2)_4$-NH structural elements, NH-$(CH_2)_6$-NH structural elements or (NH-$(CH_2)_8$-NH structural elements but the NH-$CH_2$-$CH_2$-NH structural elements being in the majority with respect to the molar share. Preferred polyethylenimines contain NH-$CH_2$-$CH_2$-NH structural elements being in the majority with respect to the molar share, for example amounting to 60 mol-% or more, more preferably amounting to at least 70 mol-%, referring to all alkylenimine structural elements. In a special embodiment, polyethylenimine refers to those polyalkylene imines that bear one or zero alkylenimine structural element per molecule that is different from NH-$CH_2$-$CH_2$-NH.

The term "polypropylenimine" in the context of the present invention does not only refer to polypropylenimine homopolymers but also to polyalkylenimines containing NH-$CH_2$-$CH_2$-$CH_2$-NH structural elements or NH-$CH_2$-$CH(CH_3)$-NH structural elements together with other alkylene diamine structural elements, for example NH-$CH_2$-$CH_2$-NH structural elements, NH-$(CH_2)_4$-NH structural elements, NH-$(CH_2)_6$-NH structural elements or (NH-$(CH_2)_8$-NH structural elements but the NH-$CH_2$-$CH_2$-$CH_2$-NH structural elements or NH-$CH_2$-$CH(CH_3)$-NH structural elements being in the majority with respect to the molar share. Preferred polypropylenimines contain NH-$CH_2$-$CH_2$-$CH_2$-NH structural elements being in the majority with respect to the molar share, for example amounting to 60 mol-% or more, more preferably amounting to at least 70 mol-%, referring to all alkylenimine structural elements. In a special embodiment, polypropylenimine refers to those polyalkylene imines that bear one or zero alkylenimine structural element per molecule that is different from NH-$CH_2$-$CH_2$-$CH_2$-NH.

Branches may be alkylenamino groups such as, but not limited to -$CH_2$-$CH_2$-$NH_2$ groups or $(CH_2)_3$-$NH_2$-groups. Longer branches may be, for examples, -$(CH_2)_3$-$N(CH_2CH_2NH_2)_2$ or -$(CH_2)_3$-$N(CH_2CH_2CH_2NH_2)_2$ groups.

In the context of the present invention, branched polyalkylenimines are characterized by their degree of branching (DB). The degree of branching can be determined, for example, by $^{13}C$-NMR spectroscopy, preferably in $D_2O$, and is defined as follows:

$$DB = D + T/D + T + L$$

with D (dendritic) corresponding to the fraction of tertiary amino groups, L (linear) corresponding to the fraction of secondary amino groups and T (terminal) corresponding to the fraction of primary amino groups.

Within the context of the present invention, branched polyethylenimines are polyethylenimines (A) with DB in the range from 0.1 to 0.95, preferably 0.25 to 0.90, particularly preferably in the range from 0.30 to 0.80% and very particularly preferably at least 0.5. Polyethylenimine (A) may be monomodal, bimodal or multimodal with respect to the molecular weight distribution.

Within the context of the present invention, highly branched polypropylenimines are polypropylenimines with DB in the range from 0.25 to 0.95, particularly preferably in the range from 0.30 to 0.90% and very particularly preferably at least 0.5.

In the context of the present invention, $CH_3$-groups are not being considered as branches.

Preferred polypropylenimine backbones are those that exhibit little or no branching, thus predominantly linear or linear polypropylenimine backbones.

The synthesis of suitable polypropylenimines has been disclosed in WO 2014/131584.

Copolymer (C) is selected from polyalkoxylated polyalkylenimines and wherein such polyalkoxylated polyalkylenimines contain at most 25 mol-% of ethylene oxide moieties in their polyalkylenoxide chains, referring to their total alkylenoxide content. Preferably, copolymer (C) is selected from polypropoxylated polyalkylenimines wherein such polypropoxylated polyalkylenimines contain at most 25 mol-% of ethylene oxide moieties in their polyalkylenoxide chains, referring to their total alkylenoxide content. Even more preferably, copolymer (C) is selected from polypropoxylated polyethylenimines and polypropoxylated polypropylenimines wherein said polypropoxylated polypropylenimines may contain zero to 25 mol-% of ethylene oxide moieties in their polyalkylenoxide chains, randomly or preferably block-wise, and from polypropoxylated polyethylenimines that do not contain measurable amounts of ethylene oxide moieties in their polyalkylenoxide chains.

Optionally, polyalkoxylated polyalkylenimines may contain one or more alkylene oxide with 4 or more C-atoms per molecule in their polyalkylene oxide chains. Examples are 1,4-butylene oxide, 1,2-butylene oxide, 1,5-pentylene oxide and 1,2-hexylene oxide. Preferably, such alkylene oxide(s) with 4 or more C-atoms per molecule is/are present with up to 25 mol-%, referring to the total alkylene oxide content of the respective polyalkoxylated polyalkylenimine.

In other embodiments, the polyalkoxylene side chains (polyalkylene oxide side chains) of copolymer (C) contain no alkylene oxide units other than propylene oxide units.

In one embodiment of the present invention, polypropoxylated polyalkylenimines are selected from polypropoxylated polyalkylenimines with an average of at least 8 and up to 50 equivalents of propylene oxide per NH group, even more preferably at least 12 and up to 30 equivalents. The expression "per NH group" refers to the respective polyalkylenimine that serves as backbone of the respective polypropoxylated polyalkylenimine. Each $NH_2$ group of a polyalkylenimine bears two chains of polyalkylenoxide, each $CH_2$-NH-$CH_2$ group bears one chain of polyalkylenoxide, and tertiary amine groups may not be alkoxylated.

In one embodiment of the present invention, the solubility of copolymer (C) in water is at most 5 g/l, preferably at most 2.5 g/l, determined with distilled water at 25°C.

In one embodiment of the present invention, copolymer (C) has a cationic charge density in the range of from 0.01 to 2 meq/g (milli-equivalent per gram), preferably 0.01 to 1 meq/g. The cationic charge density may be determined by titration. The cationic charge density can be determined, for example, by titration, for example with polyvinyl sulfate solution.

In one embodiment of the present invention, copolymer (C) has an average molecular weight $M_w$ in the range of from 2,500 to 100,000 g/mol, preferably 5,000 to 50,000 g/mol and even more preferably up to 25,000 g/mol. The average molecular weight $M_w$ may be determined by gel permeation chromatography (GPC), with 1.5 % by weight aqueous formic acid as eluent and cross-linked poly-hydroxyethylmethacrylate as stationary phase.

In one embodiment of the present invention, copolymer (C) has a broad weight distribution. A broad weight distribution in the context of copolymer (C) means that such copolymers (C) have a polydispersity $Q = M_w/M_n$ of at least 3.5, preferably from 3.5 to 10, more preferably from 4 to 9 and even more preferably from 4.0 to 5.5.

In another embodiment of the present invention, copolymer (C) has a narrow weight distribution. A narrow weight distribution in the context of copolymer (C) means that such copolymers (C) have a polydispersity $Q = M_w/M_n$ of at most 3.25, preferably from 1.5 to 3.0, more preferably from 2 to 2.5.

In one embodiment of the present invention, copolymer (C) has a HLB value (hydrophilic-lipophilic balance) in the range of from at least 4 up to 8, preferably at least 3 up to 7. The HLB value is calculated as follows:

$$HLB = 20\ (1 - M_L/M_G)$$

With $M_L$ being the molecular weight of the lipophilic portion and $M_G$ being the total molecular weight. Polypropylene oxide portions -and the respective higher alkylene oxide portions, if applicable - are deemed lipophilic. Polypropylene imine unites, if applicable, are deemed lipophilic. Polyethylene imine backbone and ethylene oxide units, if applicable, are deemed hydrophilic. Details about the HLB value are disclosed in H.-D. Dörfer, "Grenzflächen und kolloiddisperse Systeme", Springer 2002, Chapter 9.3.

In one embodiment of the present invention, formulations used in the inventive process contain in the range of from 1 to 50 % by weight, preferably 10 to 40 % by weight of complexing agent (A),
in the range of from 1 to 10 % by weight, preferably 2 to 8 % by weight and more preferably up to 6 % by weight of surfactant (B), and
in the range of from 0.1 to 10% by weight, preferably 0.25 to 5% by weight and more preferably 0.5 to 4% by weight of

copolymer (C).

Percentages of complexing agent (A), surfactant (B) and copolymer (C) are percentages by weight and refer to the total solids content of the respective formulation.

In one embodiment of the present invention, formulations used in the inventive process may have a total solids content in the range of from 90 to 99.9%, preferably 95 to 99 % by weight. Such inventive formulations are, e. g., in the form of powder or tablets.

In one embodiment of the present invention, formulations used in the inventive process may have a total solids content in the range of from 15 to 40% by weight. Such inventive formulations are, e. g., in the form of gels.

In one embodiment of the present invention, the inventive process comprises several steps, one of the steps being contacting the soiled dishware with a formulation as disclosed above, and also comprising at least one rinsing step and at least one drying step. Preferably, the formulation used in the inventive process can be used as 2-in-1 or 3-in-1 formulation, and no separate rinse agent is necessary. In another preferred embodiment, the ion exchange does not need to be treated with regenerating salt. Even more preferably, the formulation used in the inventive process can be used as 2-in-1 or 3-in-1 formulation, and neither a separate rinse agent nor a regenerating salt is necessary.

In one embodiment of the present invention, formulations used in the inventive process may contain at least one further ingredient, also being referred to as ingredient (D). Ingredient (D) may be selected from one or more surfactants other than surfactant (B), one or more enzymes, one or more builders other than complexing agent (A), in particular phosphorus-free builders, one or more cobuilders, one or more alkali carriers, one or more bleaching agents, one or more bleach catalysts, one or more bleach activators, one or more bleach stabilizers, one or more antifoams, one or more corrosion inhibitors, one or more buffer or one or more dyes.

Examples of surfactants other than surfactant (B) are in particular nonionic surfactants other than surfactant (B) as well as mixtures of anionic or zwitterionic surfactants with nonionic surfactants other than surfactant (B). Preferred nonionic surfactants other than surfactant (B) are alkoxylated alcohols and alkoxylated fatty alcohols, di- and multiblock copolymers of ethylene oxide and propylene oxide and reaction products of sorbitan with ethylene oxide or propylene oxide, alkyl glycosides and so-called amine oxides.

Preferred examples of alkoxylated alcohols and alkoxylated fatty alcohols are, for example, compounds of the general formula (II)

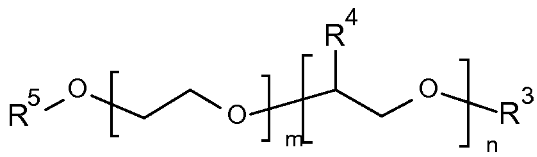

(II)

in which the variables are defined as follows:

$R^3$ is selected from hydrogen and from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

$R^4$ is identical or different and selected from linear $C_1$-$C_{10}$-alkyl, preferably in each case identical and ethyl and particularly preferably methyl,

$R^5$ is selected from $C_8$-$C_{22}$-alkyl, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,

m and n are in the range from zero to 300, where the sum of n and m is at least one. Preferably, m is in the range from 1 to 100 and n is in the range from 0 to 30.

Compounds of the general formula (II) may be block copolymers or random copolymers, preference being given to block copolymers.

Other preferred examples of alkoxylated alcohols and alkoxylated fatty alcohols are, for example, compounds of the general formula (III)

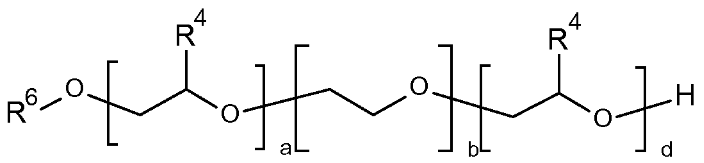

(III)

in which the variables are defined as follows:

$R^4$ is identical or different and selected from linear $C_1$-$C_4$-alkyl, preferably identical in each case and ethyl and particularly preferably methyl,

$R^6$ is selected from $C_6$-$C_{20}$-alkyl, in particular n-$C_8H_{17}$, n-$C_{10}H_{21}$, n-$C_{12}H_{25}$, n-$C_{14}H_{29}$, n-$C_{16}H_{33}$, n-$C_{18}H_{37}$,

a is a number in the range from 1 to 6,

b is a number in the range from 4 to 20,

d is a number in the range from 4 to 25.

Compounds of the general formula (III) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides are likewise suitable. An overview of suitable further nonionic surfactants can be found in EP-A 0 851 023 and in DE-A 198 19 187.

Mixtures of two or more different nonionic surfactants other than surfactant (B) may also be present.

Examples of anionic surfactants are $C_8$-$C_{20}$-alkyl sulfates, $C_8$-$C_{20}$-alkylsulfonates and $C_8$-$C_{20}$-alkyl ether sulfates with one to 6 ethylene oxide units per molecule.

In one embodiment of the present invention, formulations used in the inventive process can comprise in the range from 3 to 20% by weight of surfactant other than surfactant (B).

Formulations used in the inventive process can comprise one or more enzymes. Examples of enzymes are lipases, hydrolases, amylases, proteases, cellulases, esterases, pectinases, lactases and peroxidases.

Formulations used in the inventive process can comprise, for example, up to 5% by weight of enzyme, preference being given to 0.1 to 3% by weight, in each case based on the total solids content of the formulation according to the invention.

Over and above complexing agent (A), formulations used according to the invention can comprise one or more builders, in particular phosphate-free builders. Examples of suitable builders are fatty acid sulfonates, $\alpha$-hydroxypropionic acid, alkali metal malonates, fatty acid sulfonates, alkyl and alkenyl disuccinates, tartaric acid diacetate, tartaric acid monoacetate, oxidized starch, and polymeric builders, for example polycarboxylates and polyaspartic acid.

In one embodiment of the present invention, builders are selected from polycarboxylates, for example alkali metal salts of (meth)acrylic acid homopolymers or (meth)acrylic acid copolymers.

Suitable comonomers of polycarboxylates are monoethylenically unsaturated dicarboxylic acids such as maleic acid, fumaric acid, maleic anhydride, itaconic acid and citraconic acid.

A suitable (meth)acrylic acid homopolymer is in particular polyacrylic acid, which preferably has an average molecular weight $M_w$ in the range from 2,000 to 40,000 g/mol, preferably 2,000 to 10,000 g/mol, in particular 3,000 to 8,000 g/mol. Also of suitability are copolymeric polycarboxylates, in particular those of acrylic acid with methacrylic acid and of acrylic acid or methacrylic acid with maleic acid and/or fumaric acid.

Formulations used according to the invention can comprise, for example, in the range from in total 2.5 to 20% by weight, preferably up to 10% by weight, of builders other than complexing agent (A).

In one embodiment of the present invention, formulations used according to the invention can comprise one or more cobuilders.

Examples of cobuilders are phosphonates, for example hydroxyalkanephosphonates and aminoalkanephosphonates. Among the hydroxyalkanephosphonates, 1-hydroxyethane-1,1-diphosphonate (HEDP) is of particular importance as a cobuilder. It is preferably used as the sodium salt, the disodium salt giving a neutral reaction and the tetrasodium salt an alkaline reaction (pH 9). Suitable aminoalkanephosphonates are preferably ethylenediaminetetramethylenephosphonate (EDTMP), diethylenetriaminepentamethylenephosphonate (DTPMP) and higher homologs thereof. They are preferably used in the form of the neutrally reacting sodium salts, e.g. as hexasodium salt of EDTMP or as hepta- and

octasodium salt of DTPMP.

Moreover, amphoteric polymers can also be used as cobuilders.

Formulations used in the inventive process can comprise one or more alkali carriers. Alkali carriers ensure, for example, a pH of at least 9 if an alkaline pH is desired. Of suitability are, for example, alkali metal carbonates, alkali metal hydrogen carbonates, alkali metal hydroxides and alkali metal metasilicates. A preferred alkali metal is in each case potassium, particular preference being given to sodium.

Formulations used in the inventive process can comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Formulations used in the inventive process can comprise, for example, 0.5 to 15% by weight of bleaching agents, hereinafter also referred to as bleach (D). Bleach (D) can be selected from oxygen bleaches and chlorine-containing bleaches.

Examples of suitable oxygen bleaches are sodium perborate, anhydrous or for example as monohydrate or as tetrahydrate or so-called dihydrate, sodium percarbonate, anhydrous or, for example, as monohydrate, hydrogen peroxide, persulfates, organic peracids such as peroxylauric acid, peroxystearic acid, peroxy-$\alpha$-naphthoic acid, 1,12-diperoxydodecanedioic acid, perbenzoic acid, peroxylauric acid, 1,9-diperoxyazelaic acid, diperoxyisophthalic acid, in each case as free acid or as alkali metal salt, in particular as sodium salt, also sulfonylperoxy acids and cationic peroxy acids.

Formulations used in the inventive process can comprise, for example, in the range from 0.5 to 15% by weight of oxygen bleach.

Suitable chlorine-containing bleaches are, for example, 1,3-dichloro-5,5-dimethylhydantoin, N-N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Formulations used in the inventive process can preferably comprise, for example, in the range from 3 to 10% by weight of chlorine-containing bleach.

Formulations used in the inventive process can comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Other examples of suitable bleach activators are tetraacetylethylenediamine (TAED) and tetraacetylhexylenediamine.

Formulations used in the inventive process can comprise one or more corrosion inhibitors. In the present case, this is to be understood as including those compounds that inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, formulations used in the inventive process comprise in total in the range from 0.1 to 1.5% by weight of corrosion inhibitor.

Formulations used in the inventive process can comprise one or more fillers, for example sodium sulfate.

Formulations used in the inventive process can comprise one or more antifoams, selected for example from silicone oils and paraffin oils.

In one embodiment of the present invention, formulations used in the inventive process comprise in total in the range from 0.05 to 0.5% by weight of antifoam.

Dishware cleaned according to the inventive process exhibits excellent properties, such as very good removal of soiling, especially of fat. Furthermore, dishware cleaned according to the inventive process show excellent values for spotting, filming and residues. In addition, when modern dishwashing machines are used, the filter(s) and/or sieves will contain only very low amounts of surfactant and fat after operation.

A further aspect of the present invention are formulations, hereinafter also being referred to as inventive formulations, with whom the inventive process can advantageously be carried out. Inventive formulations may be unit doses, such as tablets, or as gel or powder, as granules or compactate. In a preferred embodiment, such a unit dose comprises 10 to 30 g of inventive formulation.

Inventive formulations may be solid, and in such embodiments they may contain some residual humidity, such as 0.01 to 10 % by weight, water. In other embodiments, inventive formulations may be liquids or gels.

Inventive formulations comprise

(A) at least one complexing agent (A), said complexing agent being selected from the alkali metal salts of citric acid, from the alkali metal salts of aminocarboxylic acids and from sodium tripolyphosphate.

Examples of alkali metal salts in the context of complexing agent (A) are the potassium salts and in particular

the sodium salts.

Preferred alkali metal salts of citric acid are the sodium salts, especially the trisodium salt.

Preferred examples of aminocarboxylic acids are methylglycine diacetic acid (MGDA), glutamic acid diacetic acid (GLDA) and iminodisuccinic acid (IDS). Preferred alkali metal salts of aminocarboxylic acids are the trisodium salt of MGDA, the tetrasodium salt of GLDA and the tetrasodium salt of IDS.

Sodium tripolyphosphate preferably refers to the respective pentasodium salt.

In one embodiment of the present invention, inventive formulations may contain a combination of at least two complexing agents (A), such as, for example, a combination of alkali metal salts of citric acid and MGDA, or of citric acid and GLDA, or combinations of alkali metal salts of citric acid and sodium tripolyphosphate. Preferred are combinations of the respective sodium salts, in particular combinations of the trisodium salts of citric acid and MGDA.

Preferably, inventive formulations are phosphate-free. In the context of the present invention, the term phosphate-free refers to a combined phosphate and polyphosphate content of 0.01 or less up to 0.5% by weight of phosphate.

Inventive formulations further comprise

(B) at least one surfactant (B)

$$R^1\text{-CH(OH)-CH}_2\text{-O-(AO)}_x\text{-R}^2 \qquad \text{(I)},$$

the variables being defined as follows:

$R^1$ is selected from $C_4$-$C_{30}$-alkyl, straight-chain or branched, and from $C_4$-$C_{30}$-alkylene, straight-chain or branched, with at least one C-C double bond, preferred is $C_4$-$C_{30}$-alkyl, straight-chain or branched, more preferred is straight-chain $C_4$-$C_{30}$-alkyl and even more preferred is n-$C_{10}$-$C_{12}$-alkyl.

$R^2$ is selected from $C_1$-$C_{30}$-alkyl, straight-chain or branched, and from $C_2$-$C_{30}$-alkylene, straight-chain or branched, with at least one C-C double bond, preferred is $C_6$-$C_{20}$-alkyl, more preferred is $C_8$-$C_{10}$-alkyl.

x is selected from one to 100, preferably from 5 to 60, more preferably 10 to 50, and even more preferably 20 to 40,

AO is selected from identical or different alkylene oxides, selected from $CH_2$-$CH_2$-O, $(CH_2)_3$-O, $(CH_2)_4$-O, $CH_2CH(CH_3)$-O, $CH(CH_3)$-$CH_2$-O- and $CH_2CH(n\text{-}C_3H_7)$-O. Preferred example of AO is $CH_2$-$CH_2$-O (EO).

In one embodiment of the present invention, $(AO)_x$ is selected from $(CH_2CH_2O)_{x1}$, x1 being selected from one to 50.

In one embodiment of the present invention, $(AO)_x$ is selected from $-(CH_2CH_2O)_{x2}$-$(CH_2CH(CH_3)\text{-}O)_{x3}$, x2 and x3 being identical or different and selected from 1 to 30.

In one embodiment of the present invention, $(AO)_x$ is selected from $-(CH_2CH_2O)_{x4}$, x4 = being in the range of from 10 to 50, AO being EO, and $R^1$ and $R^2$ each being independently selected from $C_8$-$C_{14}$-alkyl.

Inventive formulations further comprise

(C) copolymer (C), wherein such copolymer (C) is selected from polyalkoxylated polyalkylenimines wherein said polypropoxylated polyalkylenimines and polypropoxylated polyalkanolamines contain at most 25 mol-% of ethylene oxide moieties in their polyalkylenoxide chains, referring to their total alkylenoxide content.

Copolymer (C) has been described in more detail above.

In one embodiment of the present invention, polypropoxylated polyalkylenimines are selected from polypropoxylated polyalkylenimines with an average of at least 8 and up to 50 equivalents of propylene oxide per NH group, even more preferably at least 12 and up to 30 equivalents. The expression "per NH group" refers to the respective polyalkylenimine that serves as backbone of the respective polypropoxylated polyalkylenimine. Each $NH_2$ group of a polyalkylenimine bears two chains of polyalkylenoxide, each $CH_2$-NH-$CH_2$ group bears one chain of polyalkylenoxide, and tertiary amine groups may not be alkoxylated.

In one embodiment of the present invention, the solubility of copolymer (C) in water is at most 5 g/l, preferably at most 2.5 g/l, determined with distilled water at 25°C.

In one embodiment of the present invention, copolymer (C) has a cationic charge density in the range of from 0.01 to 2 meq/g (milli-equivalent per gram), preferably 0.01 to 1 meq/g. The cationic charge density may be determined by titration, vide supra.

In one embodiment of the present invention, copolymer (C) has an average molecular weight $M_w$ in the range of from 2,500 to 100,000 g/mol. The average molecular weight $M_w$ may be determined by gel permeation chromatography (GPC), with 1.5 % by weight aqueous formic acid as eluent and cross-linked poly-hydroxyethylmethacrylate as stationary phase.

In one embodiment of the present invention, copolymer (C) has a broad weight distribution. A broad weight

distribution in the context of copolymer (C) means that such copolymers (C) have a polydispersity Q = $M_w/M_n$ of at least 3.5, preferably from 3.5 to 10, more preferably from 4 to 9 and even more preferably from 4.0 to 5.5.

In another embodiment of the present invention, copolymer (C) has a narrow weight distribution. A narrow weight distribution in the context of copolymer (C) means that such copolymers (C) have a polydispersity Q = $M_w/M_n$ of at most 3.25, preferably from 1.5 to 3.0, more preferably from 2 to 2.5.

Preferably, inventive formulations are phosphate-free. The term "phosphate free" has been defined above.

In one embodiment of the present invention, inventive formulations contain

in the range of from 1 to 50 % by weight, preferably 10 to 40 % by weight of complexing agent (A),

in the range of from 1 to 10 % by weight, preferably 2 to 8 % by weight and more preferably up to 6 % by weight of surfactant (B), and

in the range of from 0.1 to 10% by weight, preferably 0.25 to 5% by weight and more preferably 0.5 to 4% by weight of copolymer (C).

Percentages of complexing agent (A), surfactant (B) and copolymer (C) are percentages by weight and refer to the total solids content of the respective formulation.

In one embodiment of the present invention, inventive formulations have a total solids content in the range of from 90 to 99.9%, preferably 95 to 99 % by weight. Such inventive formulations are, e. g., in the form of powder or tablets.

In one embodiment of the present invention, inventive formulations have a total solids content in the range of from 15 to 40% by weight. Such inventive formulations are, e. g., in the form of gels.

In one embodiment of the present invention, inventive formulations may contain at least one further ingredient, also being referred to as ingredient (D). Ingredient (D) may be selected from one or more surfactants other than surfactant (B), one or more enzymes, one or more builders other than complexing agent (A), in particular phosphorus-free builders, one or more cobuilders, one or more alkali carriers, one or more bleaching agents, one or more bleach catalysts, one or more bleach activators, one or more bleach stabilizers, one or more antifoams, one or more corrosion inhibitors, one or more buffer or one or more dyes. Ingredients (D) have been explained in more detail above.

In one embodiment of the present invention, inventive formulations contain up to 15% by weight of polypropoxylated triethanolamine, percentages referring to copolymer (C). In other embodiments, inventive formulations do not contain detectable amounts of polypropoxylated triethanolamine.

Inventive formulations are excellently suitable for carrying out the inventive process.

Also disclosed herein is a process for making inventive formulations, hereinafter also being referred to as inventive manufacturing process. The inventive manufacturing process comprises mixing complexing agent (A), surfactant (B) and copolymer (C) and, if applicable, one or more further ingredient (D), in one or more steps. Such mixing can be performed in the absence or presence of water, preferably mixing is being performed in the absence of water. In other embodiments, at least one of the components complexing agent (A), surfactant (B) and copolymer (C) or, if applicable, one or more further ingredient (D), is added as aqueous solution to other components that are powdery or in the form of granules, and the water is being removed during or after mixing. Mixing can be performed at a temperature in the range of from 5 to 100°C, preferably 20 to 70°C or at ambient temperature.

In one embodiment of the present invention, the inventive manufacturing process is being carried out in the presence of water, and such water is at least partially removed at the end of the inventive manufacturing process, for example by spray-drying or by making compactates of granules of different components or of premixed components.

The invention is further explained by the following working examples.

General remarks:

The charge density of copolymers (C) was determined as follows (see also: Horn, Prog. Colloid & Polym. Sci. 1978, 65, 251):

1 g of the copolymer (C) in question was dissolved in 100 ml of demineralized water. A buffer solution and aqueous HCl were used to establish a pH of 4.0, determined potentiometrically.

Three ml of an aqueous solution of toluidine blue (50 mg/l of water) were added, and N/400-KPVS (potassium polyvinyl sulfate) solution (Wako) with a concentration of 0.0004 meq/ml was titrated until the color changed from blue to pink. The charge density was calculated as follows:

$$LA = 0.4 \cdot KV$$

LA: Charge density of the copolymer (C) in question, meq/g (milliequivalent/g)

KV: Consumption of the N/400-KPVS solution [ml]

The following ingredients were used:

(A.1): trisodium salt of methyl glycine diacetic acid
(A.2): trisodium salt of citric acid
Surfactant (B.1): n-$C_8H_{17}$-CH(OH)-$CH_2$-O-$(EO)_{22}$-CH($CH_3$)-$CH_2$-O-n-$C_{10}H_{21}$
Surfactant (B.2): n-$C_{10}H_{21}$-CH(OH)-$CH_2$-O-$(EO)_{40}$-n-$C_{10}H_{21}$

eq: equivalents, meq: milliequivalents

I. Syntheses of copolymers (C)

I.1 Synthesis of polypropoxylated polyethylenimine (C.5)

An amount of 15.3 g of a 50% by weight aqueous solution of KOH was added to 487 g of polyethylenimine, alkoxylated with 0.9 eq propylene oxide/NH group, $M_n$: 800 g/mol before propoxylation, NH value: 18.2 mmol/g. The water was removed by rotary evaporation, 90°C, at 10 mbar over a period of time of 2 hours. The resultant mass was placed into a 20-l-steel autoclave. The autoclave was purged three times with dry nitrogen. Then, a pressure of 2 bar nitrogen at ambient temperature was effected. The autoclave was heated to 130°C. Then, an amount of 500 g of propylene oxide was added within 15 minutes. Then, additional 4,480 g of propylene oxide were added within 12 hours under stirring. The resultant reaction mixture was stirred at 130°C for another 4 hours. Then, the autoclave was cooled down to ambient temperature and the unreacted propylene oxide was removed by releasing the pressure. Residual propylene oxide was removed under vacuum by rotary evaporation. An amount of 5,463 g of a brownish solid residue was obtained. It corresponds to inventive polypropoxylated polyethylenimine (C.5), 20 eq. PO per NH group.

1.2 Synthesis of polypropoxylated polyethylenimine (C.6)

An amount of 5.9 g of a 50% by weight aqueous solution of KOH was added to 186 g of polyethylenimine, alkoxylated with 0.9 eq propylene oxide/NH group, $M_n$: 5,100 g/mol before propoxylation, NH value: 17.2 mmol/g. The water was removed by rotary evaporation, 90°C, at 10 mbar over a period of time of 2 hours. The resultant mass was placed into a 5-l-steel autoclave. The autoclave was purged three times with dry nitrogen. Then, a pressure of 2 bar nitrogen at ambient temperature was effected. The autoclave was heated to 130°C. Then, an amount of 230 g of propylene oxide was added within 15 minutes. Then, additional 647 g of propylene oxide were added within 12 hours under stirring. The resultant reaction mixture was stirred at 130°C for another 4 hours. Then, the autoclave was cooled down to ambient temperature and the unreacted propylene oxide was removed by releasing the pressure. Residual propylene oxide was removed under vacuum by rotary evaporation. An amount of 1,066 g of a yellowish solid residue was obtained. It corresponds to inventive polypropoxylated polyethylenimine (C.6), 12 eq. PO per NH group.

1.3 Synthesis of polypropoxylated polyethylenimine (C.7)

An amount of 5.1 g of a 50% by weight aqueous solution of KOH was added to 162 g of polypropylenimine, alkoxylated with 0.9 eq propylene oxide/NH group, $M_n$: 1,200 g/mol before propoxylation, NH value: 18.4 mmol/g. The water was removed by rotary evaporation, 90°C, at 10 mbar over a period of time of 2 hours. The resultant mass was placed into a 5-l-steel autoclave. The autoclave was purged three times with dry nitrogen. Then, a pressure of 2 bar nitrogen at ambient temperature was effected. The autoclave was heated to 130°C. Then, an amount of 200 g of propylene oxide was added within 15 minutes. Then, additional 1,294 g of propylene oxide were added within 12 hours under stirring. Then, 300 g of ethylene oxide were added within 4 hours under stirring at 130°C. The resultant reaction mixture was stirred at 130°C for another 4 hours. Then, the autoclave was cooled down to ambient temperature and the unreacted propylene oxide was removed by releasing the pressure. Residual propylene oxide was removed under vacuum by rotary evaporation. An amount of 1,959 g of a yellowish solid residue was obtained. It corresponds to inventive polypropoxylated polyethylenimine (C.7), 18 eq. PO and 5 eq. EO per NH group.

Further copolymers (C) were synthesized following the above protocols but with the following modifications.

1.4 Synthesis of comparative copolymer C-(C.8)

It was worked according to I.2 but, instead of 12 eq. propylene oxide ("PO") per NH group, 16 eq. of EO were added, followed by 4 e. of PO. Comparative polymer C-(C.8) was obtained. The properties of copolymers (C) and comparative copolymers (C) are summarized in Table 1.

The base detergent composition according to Table 2 was used for making formulations according to the

invention and comparison formulations.

Table 1

| | Polymer as backbone | $M_n$ | $M_w/M_n$ | OH Number [mmol/g] | NH number [mmol/g] | eq. EO/eq OH or NH | eq. PO/eq OH or NH |
|---|---|---|---|---|---|---|---|
| (C.5) | PEI | 800 | 1.9 | - | 18.2 | | 20 |
| (C.6) | PEI | 5,100 | 1.7 | - | 17.2 | | 12 |
| (C.7) | PPI | 1,200 | 4.4 | - | 18.4 | 5 | 18 |
| C-(C. 8) | PEI | 5,100 | 1.7 | | 17.2 | 16 | 4 |
| | Solubility in water at 20°C [g/l] | | | | Charge density [meq/g] | | |
| (C.5) | 1.9 | | | | 0.45 | | |
| (C.6) | 2.8 | | | | 0.7 | | |
| (C.7) | 4.2 | | | | 0.1 | | |
| C-(C. 8) | >500 | | | | 0.4 | | |
| $M_n$ and $M_w/M_n$ refer to the polymer as backbone.<br>Abbreviations: PEI: polyethylenimine, PPI: polypropylenimine | | | | | | | |

Table 2: Base detergent composition

| Feed material | Base-1 |
|---|---|
| Protease | 2.5 |
| Amylase | 1 |
| (B.1) | 4 |
| (B.2) | 1 |
| Sodium percarbonate (D.1) | 10.5 |
| TAED | 4 |
| $Na_2Si_2O_5$, commercial product (Britesil®) | 2 |
| $Na_2CO_3$ | 24.5 |
| (A.1) | 10 |
| Sodium citrate dehydrate (A.2) | 35 |
| Polyacrylic acid $M_w$ 4000 g/mol, as sodium salt, completely neutralized | 5 |
| HEDP | 0.5 |
| All data in g. | |

Firstly, base mixtures were prepared from the feed materials according to Table 2. The feed materials as well as the respective copolymer (C) or comparative copolymer (C) were mixed in dry state apart from (B.1), which was finally added in molten form.

General remarks about the dish-wash process:

Fat residue tests:

All dish-wash experiments were carried out in Miele automatic dish wash machines, type G1222 SCL. The program 50°C ("R-time 2", for washing) and 65° for rinsing was selected. No separate rinsing agent was added, no regenerating salt was used. Before the tests started the sieves of the dishwashers were weighed. The dish-wash experiments were carried out with water, 21° dH (German hardness), Ca/Mg:$HCO_3$ (3:1):1.35. In each experiment three knives (stainless steel), three blue melamine resin plates, eleven drinking glasses and fourteen plates from china were placed in the dishwasher. Before each cycle, 5 g of Biskin Gold®, a solid vegetable fat, and 5 g of margarine were added. In each cycle of an experiment according to the invention, 18 g of a formulation according to table 3 were added. In each comparison experiment according to the invention, 18 g of a formulation according to table 3 but excluding copolymer (C.1) were added.

5 cycles were run without drying times between cycles. After the 5$^{th}$ cycles the sieve was taken out of the machine and dried over night. Then weights of the sieves were determined and the differences to their weights before the first cycle were calculated. The results are summarized in Table 3. weight differences of sieves

Table 3: weight differences of sieves

| | 18 g of formulation | 18 g of formulation + 180 mg of copolymer (C) |
|---|---|---|
| (C.5) | 14.8 | 1.5 |
| (C.6) | 14.0 | 2.6 |
| (C.7) | 15.0 | 1.9 |
| C-(C.8) | 14.4 | 13.9 |

The addition of 180 mg of copolymer (C) significantly reduced the fat residue in the test.

**Claims**

1. Process for cleaning dishware soiled with fatty residue, **characterized in that** said process is carried out at a temperature in the range of from 45 to 65°C using at least one formulation, comprising

   (A) at least one complexing agent, selected from the alkali metal salts of citric acid, of aminocarboxylic acids and from sodium tripolyphosphate,
   (B) at least one non-ionic surfactant of general formula (I)

   $$R^1\text{-}CH(OH)\text{-}CH_2\text{-}O\text{-}(AO)_x\text{-}R^2 \qquad (I)$$

   (C) at least one copolymer selected from polyalkoxylated polyalkylenimines wherein said polyalkoxylated polyalkylenimines contain at most 25 mol-% of ethylene oxide moieties in their polyalkylenoxide chains, referring to their total alkylenoxide content, wherein:

   $R^1$ selected from $C_4$-$C_{30}$-alkyl, straight-chain or branched, and from $C_4$-$C_{30}$-alkylene, straight-chain or branched, with at least one C-C double bond,
   $R^2$ selected from $C_1$-$C_{30}$-alkyl, straight-chain or branched, and from $C_2$-$C_{30}$-alkylene, straight-chain or branched, with at least one C-C double bond,
   x being selected from one to 100,
   AO identical or different alkylene oxides, selected from $CH_2$-$CH_2$-O, $(CH_2)_3$-O, $(CH_2)_4$-O, $CH_2CH(CH_3)$-O, $CH(CH_3)$-$CH_2$-O- and $CH_2CH(n\text{-}C_3H_7)$-O.

2. Process according to claim 1, wherein said formulation contains
   in the range of from 10 to 50 % by weight complexing agent (A),
   in the range of from 1 to 10% by weight of non-ionic surfactant (B),
   in the range of from 0.1 to 10% by weight of copolymer (C),
   percentages being based on the total solids content of said formulation.

3. Process according to claim 1 or 2, wherein complexing agent (A) is selected from the alkali metal salts of methyl glycine diacetate (MGDA), iminodisuccinic acid (IDS) and glutamic acid diacetate (GLDA).

4. Process according to any of claims 1 to 3, wherein copolymer (C) has an average molecular weight $M_w$ in the range of from 2,500 to 100,000 g/mol.

**5.** Process according to any of claims 1 to 4, wherein said formulation further contains the alkali metal salt of a (meth)acrylic acid homopolymer.

**6.** Process according to any of claims 1 to 5, wherein copolymer (C) is selected from polyalkoxylated polyethylenimines with a solubility in water of at most 5 g/l at 20°C.

**7.** Formulation, comprising

(A) at least one complexing agent, selected from the alkali metal salts of citric acid, aminocarboxylic acids and from sodium tripolyphosphate,
(B) at least one non-ionic surfactant of general formula (I)

$$R^1\text{-CH(OH)-CH}_2\text{-O-(AO)}_x\text{-R}^2 \qquad \text{(I)}$$

(C) at least one copolymer selected from polyalkoxylated polyalkylenimines wherein said polyalkoxylated polyalkylenimines contain at most 25 mol-% of ethylene oxide moieties in their polyalkylenoxide chains, referring to their total alkylenoxide content,
wherein:

$R^1$ selected from $C_4$-$C_{30}$-alkyl, straight-chain or branched, and from $C_4$-$C_{30}$-alkylene, straight-chain or branched, with at least one C-C double bond,
$R^2$ selected from $C_1$-$C_{30}$-alkyl, straight-chain or branched, and from $C_2$-$C_{30}$-alkylene, straight-chain or branched, with at least one C-C double bond,
x selected from one to 100,
AO identical or different alkylene oxides, selected from $CH_2$-$CH_2$-O, $(CH_2)_3$-O, $(CH_2)_4$-O, $CH_2CH(CH_3)$-O, $CH(CH_3)$-$CH_2$-O- and $CH_2CH(n$-$C_3H_7)$-O.

**8.** Formulation according to claim 7, wherein said formulation contains
in the range of from 10 to 50 % by weight complexing agent (A),
in the range of from 1 to 10% by weight of non-ionic surfactant (B),
in the range of from 0.1 to 10% by weight of copolymer (C),
percentages being based on the total solids content of said formulation.

**9.** Formulation according to claim 7 or 8, wherein complexing agent (A) is selected from the alkali metal salts of methyl glycine diacetate (MGDA), iminodisuccinic acid (IDS) and glutamic acid diacetate (GLDA).

**10.** Formulation according to any of claims 7 to 9, wherein said formulation further contains the alkali metal salt of a (meth)acrylic acid homopolymer.

**11.** Formulation according to any of claims 7 to 10, wherein copolymer (C) has an average molecular weight $M_w$ in the range of from 2,500 to 100,000 g/mol.

**12.** Formulation according to any of claims 7 to 11, wherein copolymer (C) is selected from polypropoxylated polyethylenimines with a solubility in water of at most 5 g/l at 20°C.

## Patentansprüche

**1.** Verfahren zum Reinigen von mit fettigen Rückständen verschmutztem Geschirr, **dadurch gekennzeichnet, dass** das Verfahren bei einer Temperatur im Bereich von 45 bis 65 °C unter Verwendung mindestens einer Formulierung, umfassend

(A) mindestens einen Komplexbildner, der aus Alkalimetallsalzen von Citronensäure, Aminocarbonsäuren und Natriumtripolyphosphat ausgewählt ist,
(B) mindestens ein nichtionisches Tensid der allgemeinen Formel (I)

$$R^1\text{-CH(OH)-CH}_2\text{-O-(AO)}_x\text{-R}^2 \qquad \text{(I)}$$

(C) mindestens ein Copolymer, das aus polyalkoxylierten Polyalkyleniminen ausgewählt ist, wobei die polyalkoxylierten Polyalkylenimine in ihren Polyalkylenoxidketten höchstens 25 Mol-% Ethylenoxidgruppierungen, bezogen auf ihren gesamten Alkylenoxidgehalt, enthalten,
durchgeführt wird, wobei:

$R^1$ aus geradkettigem oder verzweigtem $C_4$-$C_{30}$-Alkyl und aus geradkettigem oder verzweigtem $C_4$-$C_{30}$-Alkenyl mit mindestens einer C-C-Doppelbindung ausgewählt ist,
$R^2$ aus geradkettigem oder verzweigtem $C_1$-$C_{30}$-Alkyl und aus geradkettigem oder verzweigtem $C_2$-$C_{30}$-Alkenyl mit mindestens einer C-C-Doppelbindung ausgewählt ist,
x aus eins bis 100 ausgewählt ist,
AO für gleiche oder verschiedene Alkylenoxide, die aus $CH_2$-$CH_2$-O, $(CH_2)_3$-O, $(CH_2)_4$O, $CH_2CH(CH_3)$-O, $CH(CH_3)$-$CH_2$-O und $CH_2CH(n\text{-}C_3H_7)$-O ausgewählt sind, steht.

**2.** Verfahren nach Anspruch 1, wobei die Formulierung im Bereich von 10 bis 50 Gew.-% Komplexbildner (A),
im Bereich von 1 bis 10 Gew.-% nichtionisches Tensid (B),
im Bereich von 0,1 bis 10 Gew.-% Copolymer (C) enthält, wobei sich die Gewichtsprozentangaben auf den gesamten Feststoffgehalt der Formulierung beziehen.

**3.** Verfahren nach Anspruch 1 oder 2, wobei der Komplexbildner (A) aus den Alkalimetallsalzen von Methylglycindiacetat (MGDA), Iminodibernsteinsäure (IDS) und Glutaminsäurediacetat (GLDA) ausgewählt ist.

**4.** Verfahren nach einem der Ansprüche 1 bis 3, wobei das Copolymer (C) ein mittleres Molekulargewicht $M_w$ im Bereich von 2500 bis 100.000 g/mol aufweist.

**5.** Verfahren nach einem der Ansprüche 1 bis 4, wobei die Formulierung ferner das Alkalimetallsalz eines (Meth)acrylsäure-Homopolymers enthält.

**6.** Verfahren nach einem der Ansprüche 1 bis 5, wobei das Copolymer (C) aus polyalkoxylierten Polyethyleniminen mit einer Wasserlöslichkeit von höchstens 5 g/l bei 20 °C ausgewählt ist.

**7.** Formulierung, umfassend

(A) mindestens einen Komplexbildner, der aus Alkalimetallsalzen von Citronensäure, Aminocarbonsäuren und Natriumtripolyphosphat ausgewählt ist,
(B) mindestens ein nichtionisches Tensid der allgemeinen Formel (I)

$$R^1\text{-CH(OH)-CH}_2\text{-O-(AO)}_x\text{-R}^2 \qquad \text{(I)}$$

(C) mindestens ein Copolymer, das aus polyalkoxylierten Polyalkyleniminen ausgewählt ist, wobei die polyalkoxylierten Polyalkylenimine in ihren Polyalkylenoxidketten höchstens 25 Mol-% Ethylenoxidgruppierungen, bezogen auf ihren gesamten Alkylenoxidgehalt, enthalten,
wobei:

$R^1$ aus geradkettigem oder verzweigtem $C_4$-$C_{30}$-Alkyl und aus geradkettigem oder verzweigtem $C_4$-$C_{30}$-Alkenyl mit mindestens einer C-C-Doppelbindung ausgewählt ist,
$R^2$ aus geradkettigem oder verzweigtem $C_1$-$C_{30}$-Alkyl und aus geradkettigem oder verzweigtem $C_2$-$C_{30}$-Alkenyl mit mindestens einer C-C-Doppelbindung ausgewählt ist,
x aus eins bis 100 ausgewählt ist,
AO für gleiche oder verschiedene Alkylenoxide, die aus $CH_2$-$CH_2$-O, $(CH_2)_3$-O,$(CH_2)_4$-O, $CH_2CH(CH_3)$-O, $CH(CH_3)$-$CH_2$-O und $CH_2CH(n\text{-}C_3H_7)$-O ausgewählt sind, steht.

**8.** Formulierung nach Anspruch 7, wobei die Formulierung
im Bereich von 10 bis 50 Gew.-% Komplexbildner (A),
im Bereich von 1 bis 10 Gew.-% nichtionisches Tensid (B),
im Bereich von 0,1 bis 10 Gew.-% Copolymer (C) enthält, wobei sich die Gewichtsprozentangaben auf den gesamten Feststoffgehalt der Formulierung beziehen.

**9.** Formulierung nach Anspruch 7 oder 8, wobei der Komplexbildner (A) aus den Alkalimetallsalzen von Methylglycindiacetat (MGDA), Iminodibernsteinsäure (IDS) und Glutaminsäurediacetat (GLDA) ausgewählt ist.

**10.** Formulierung nach einem der Ansprüche 7 bis 9, wobei die Formulierung ferner das Alkalimetallsalz eines (Meth)acrylsäure-Homopolymers enthält.

**11.** Formulierung nach einem der Ansprüche 7 bis 10, wobei das Copolymer (C) ein mittleres Molekulargewicht $M_w$ im Bereich von 2500 bis 100.000 g/mol aufweist.

**12.** Formulierung nach einem der Ansprüche 7 bis 11, wobei das Copolymer (C) aus polypropoxylierten Polyethyleniminen mit einer Wasserlöslichkeit von höchstens 5 g/l bei 20 °C ausgewählt ist.

## Revendications

**1.** Procédé de nettoyage de vaisselle salie par des résidus gras, **caractérisé en ce que** ledit procédé est mis en œuvre à une température de 45 à 65 °C en utilisant au moins une formulation, comprenant :

(A) au moins un agent complexant, sélectionné parmi les sels de métaux alcalins de l'acide citrique et des acides aminocarboxyliques, et le tripolyphosphate de sodium,
(B) au moins un tensioactif non ionique ayant la formule générale (I)

$$R^1\text{-}CH(OH)\text{-}CH_2\text{-}O\text{-}(AO)_x\text{-}R^2 \qquad (I)$$

(C) au moins un copolymère sélectionné parmi des polyalkylèneimines polyalcoxylées, lesdites polyalkylèneimines polyalcoxylées contenant au maximum 25 %mol de fractions oxyde d'éthylène dans leurs chaînes oxyde de polyalkylène, relativement à leur teneur totale en oxyde d'alkylène,

où :

$R^1$ est sélectionné parmi un groupe alkyle $C_4$-$C_{30}$, à chaîne linéaire ou ramifiée, et un groupe alkylène $C_4$-$C_{30}$, à chaîne linéaire ou ramifiée, comportant au moins une double liaison C-C,
$R^2$ est sélectionné parmi un groupe alkyle $C_1$-$C_{30}$, à chaîne linéaire ou ramifiée, et un groupe alkylène $C_2$-$C_{30}$, à chaîne linéaire ou ramifiée, comportant au moins une double liaison C-C,
x est sélectionné pour avoir une valeur de 1 à 100, AO consiste en des oxydes d'alkylène identiques ou différents, sélectionnés parmi $CH_2$-$CH_2$-O, $(CH_2)_3$-O, $(CH_2)_4$-O, $CH_2CH(CH_3)$-O, $CH(CH_3)$-$CH_2$-O- et $CH_2CH(n\text{-}C_3H_7)$-O.

**2.** Procédé selon la revendication 1, dans lequel ladite formulation contient :

de 10 à 50 % en poids d'un agent complexant (A),
de 1 à 10 % en poids d'un tensioactif non ionique (B),
de 0,1 à 10 % en poids d'un copolymère (C),
les pourcentages étant exprimés relativement à la teneur totale en solides de ladite formulation.

**3.** Procédé selon la revendication 1 ou 2, dans lequel l'agent complexant (A) est sélectionné parmi les sels de métaux alcalins du diacétate de méthylglycine (MGDA), de l'acide iminodisuccinique (IDS) et de l'acide glutamique-diacétique (GLDA).

**4.** Procédé selon l'une quelconque des revendications 1 à 3, dans lequel le copolymère (C) a une masse moléculaire moyenne $M_w$ de 2 500 à 100 000 g/mol.

**5.** Procédé selon l'une quelconque des revendications 1 à 4, dans lequel ladite formulation contient en outre le sel de métal alcalin d'un homopolymère d'acide (méth)acrylique.

**6.** Procédé selon l'une quelconque des revendications 1 à 5, dans lequel le copolymère (C) est sélectionné parmi des polyéthylèneimines polyalcoxylées ayant une solubilité dans l'eau d'au maximum 5 g/l à 20 °C.

**7.** Formulation, comprenant :

(A) au moins un agent complexant, sélectionné parmi les sels de métaux alcalins de l'acide citrique et des acides aminocarboxyliques, et le tripolyphosphate de sodium,
(B) au moins un tensioactif non ionique ayant la formule générale (I)

$$R^1\text{-CH(OH)-CH}_2\text{-O-(AO)}_x\text{-R}^2 \qquad (I)$$

(C) au moins un copolymère sélectionné parmi des polyalkylèneimines polyalcoxylées, lesdites polyalkylèneimines polyalcoxylées contenant au maximum 25 %mol de fractions oxyde d'éthylène dans leurs chaînes oxyde de polyalkylène, relativement à leur teneur totale en oxyde d'alkylène,

où :

$R^1$ est sélectionné parmi un groupe alkyle $C_4$-$C_{30}$, à chaîne linéaire ou ramifiée, et un groupe alkylène $C_4$-$C_{30}$, à chaîne linéaire ou ramifiée, comportant au moins une double liaison C-C,
$R^2$ est sélectionné parmi un groupe alkyle $C_1$-$C_{30}$, à chaîne linéaire ou ramifiée, et un groupe alkylène $C_2$-$C_{30}$, à chaîne linéaire ou ramifiée, comportant au moins une double liaison C-C,
x est sélectionné pour avoir une valeur de 1 à 100, AO consiste en des oxydes d'alkylène identiques ou différents, sélectionnés parmi $CH_2$-$CH_2$-O, $(CH_2)_3$-O, $(CH_2)_4$-O, $CH_2CH(CH_3)$-O, $CH(CH_3)$-$CH_2$-O- et $CH_2CH(n\text{-}C_3H_7)$-O.

**8.** Formulation selon la revendication 7, ladite formulation contenant :

de 10 à 50 % en poids d'un agent complexant (A),
de 1 à 10 % en poids d'un tensioactif non ionique (B),
de 0,1 à 10 % en poids d'un copolymère (C),
les pourcentages étant exprimés relativement à la teneur totale en solides de ladite formulation.

**9.** Formulation selon la revendication 7 ou 8, dans laquelle l'agent complexant (A) est sélectionné parmi les sels de métaux alcalins du diacétate de méthylglycine (MGDA), de l'acide iminodisuccinique (IDS) et de l'acide glutamique-diacétique (GLDA).

**10.** Formulation selon l'une quelconque des revendications 7 à 9, ladite formulation contenant en outre le sel de métal alcalin d'un homopolymère d'acide (méth)acrylique.

**11.** Formulation selon l'une quelconque des revendications 7 à 10, dans laquelle le copolymère (C) a une masse moléculaire moyenne $M_w$ de 2 500 à 100 000 g/mol.

**12.** Formulation selon l'une quelconque des revendications 7 à 11, dans laquelle le copolymère (C) est sélectionné parmi des polyéthylèneimines polypropoxylées ayant une solubilité dans l'eau d'au maximum 5 g/l à 20 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100234631 A
- US 20090124529 A
- WO 2015000744 A
- WO 2008095563 A
- WO 2014131584 A
- EP 0851023 A
- DE 19819187 A


### Non-patent literature cited in the description


- **HORN.** *Prog. Colloid & Polym. Sci.,* 1978, vol. 65, 251